(19) Europäisches Patentamt / European Patent Office / Office européen des brevets

(11) **EP 2 307 912 B1**

(12) **EUROPEAN PATENT SPECIFICATION**

(45) Date of publication and mention of the grant of the patent:
**18.07.2018 Bulletin 2018/29**

(21) Application number: **09787820.1**

(22) Date of filing: **31.07.2009**

(51) Int Cl.:
***G01T 1/178*** *(2006.01)*

(86) International application number:
**PCT/IT2009/000353**

(87) International publication number:
**WO 2010/016085 (11.02.2010 Gazette 2010/06)**

(54) **NEW METHODS AND APPARATUS FOR THE MEASUREMENTS OF RADON CONCENTRATIONS INDOORS, IN SOIL, IN WATER, AND/OR AQUEOUS MEDIA**

NEUE VERFAHREN UND VORRICHTUNG ZUR MESSUNG DER RADONKONZENTRATION IN GESCHLOSSENEN RÄUMEN, IM BODEN, IN WASSER UND/ODER WÄSSRIGEN MEDIEN

NOUVEAUX PROCÉDÉS ET APPAREIL POUR LES MESURES DE CONCENTRATIONS DE RADON EN INTÉRIEUR, DANS LE SOL, DANS L'EAU ET/OU DANS DES MILIEUX AQUEUX

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.08.2008   IT RM20080429**
**05.08.2008   IT RM20080430**

(43) Date of publication of application:
**13.04.2011   Bulletin 2011/15**

(73) Proprietors:
- **Tommasino, Maria Cristina**
  **00123 Roma (IT)**
- **Tommasino, Pier Mattia**
  **00123 Roma (IT)**

(72) Inventor: **TOMMASINO, Luigi**
**I-00123 Roma (IT)**

(74) Representative: **Iannone, Carlo Luigi et al**
**Barzanò & Zanardo Roma S.p.A.**
**Via Piemonte 26**
**00187 Roma (IT)**

(56) References cited:
**EP-A- 0 280 416      EP-A- 0 351 939**
**DD-A7- 281 325      US-A- 4 385 236**
**US-A- 5 065 030**

- **CSIGE I ET AL: "The Radamon radon detector and an example of application" RADIATION MEASUREMENTS, ELSEVIER, AMSTERDAM, NL, vol. 34, no. 1-6, 1 June 2001 (2001-06-01), pages 437-440, XP004301304 ISSN: 1350-4487 cited in the application**

**Description**

BACKGROUND OF THE INVENTION

RADON IN THE ENVIRONMENT

Radon gas in closed environments (dwellings, schools, office buildings, mines, etc.) is the most significant source for global human radiation-exposure. High indoor-radon concentrations are often related to gas migration processes that derive from the geological formation, from the soil and from underground water. The same processes are of interest for geological risk prediction (earthquakes, volcanic processes, etc.), mineral explorations, hydrogeology, etc.

The activity radon concentration indoors is highly dependent on building characteristics, geology, living habits, time, etc. The only way to know the radon concentration in any given building is to carry out the measurement by suitable instruments. To this end, large scale surveys of radon measurements indoors are carried out throughout the world.

LARGE SCALE SURVEYS FOR LONG-TERM RADON MEASUREMENTS

Among the different monitor-systems available, the radon diffusion chambers enclosing passive track detectors present attractive characteristics for large scale survey of interest both for radioprotection and earth sciences, as reported by one of the author (LT) of the present invention ("Radon". In Radiochemical Methods. Encyclopedia of Analytical Science. pp4359-4368. Academic Press Limited (1995)).

In particular, large radon survey in dwellings and workplaces are carried out throughout the world by using diffusion chambers enclosing alpha-track detectors as reported, for example, by Fleischer (Radon in the Environment-Opportunities and Hazards. Nuclear Tracks and Radiation Measurements. Vol. 14, N°4, pp 421-435 (1988)).

However, because of their limited response linearity, these monitors are often not suitable for measuring the large radon concentrations encountered in soil, in caves, in thermal spa, and etc.

With the above said passive monitors, only one of the surfaces of the track detector is typically used. In order to increase the response linearity of said radon monitors, Csige and Csegzi (The Radamon radon detector and an example of application. In Radiation Measurements 34, pp 437-440 (2001)) have also used the back surface of the track detector by ensuring an air layer of about 1 mm or less between said back surface and the wall of the passive chamber. However, the response of the detector back-surface is not only due to the radon from said air layer, as claimed by said authors, but also to the radon absorbed into the wall of the diffusion chamber-housing, as reported by More and Hubbard (222Rn absorption in plastic holders for alpha track detectors: a source of error- Radiation Protection Dosimetry. Vol. 71, pp85-91 (1997)).

These measurements are affected by the difficulty of obtaining a reproducible thin layer of air above said detector surface. Another source of errors may be due to the fact that the radon absorption into the plastics of the chamber wall does not occur under equilibrium conditions. In such case, the amount of the radon absorbed by said plastics depends strongly on the temperature.

It would be highly advantageous if the back detector-surface could be exploited in order to increase the response linearity of all passive radon chambers without the above said sources of errors.

When used for in-soil radon measurements, these passive radon monitors require the drilling of large holes into the soil. Since a single sampling is often not sufficient, an array of the sampling units may be required, thus resulting in extensive field work. Moreover, large soil-holes may cause errors in radon measurements as reported by Tanner (Errors in measuring radon in soil gas by means of passive detector. Nuclear Geophysics Vol. 5, pp25-30 (1991).

In order to be able to use these passive radon monitors for long-term soil-radon-measurements, attempts have been made in the past to reduce the response of passive detectors. For example Mazur et al. ("Measurements of radon concentration in soil gas by CR-39 detectors". Radiation Measurements 31, pp 295-300 (1999)) have enclosed the track detector in a very small tube-diameter of 5 mm. Thanks to their small sizes, these small passive chambers can be inserted directly underground without the need of preformed large path-holes.

Unfortunately, in said case, by decreasing the sizes of the diffusion chambers by a factor of 100 (say from 30 $cm^3$ to 0.3 $cm^3$) it was only possible to reduce the response sensitivity by a factor of 10 or less. With this approach, no more reduction in sensitivity is possible since, in practice, it is difficult to further reduce the size of said passive chambers.

It would be highly advantageous to have very compact passive radon monitors, for which any desired reduction of the detector response could be achieved without changing either the sizes of the track detector or those of the passive samplers.

In spite of the fact that radon measurements in water are needed for both health protection and earth sciences, presently available passive radon monitors do not make it possible to carry out radon measurements directly in water.

D. Pressianov, et al. (The compact disk as radon detector-A laboratory study of the method. Health Physics, 64, pp 642-651 (2003)) have reported a simple and compact passive radon monitor based on the absorption of radon within the bulk of track detector itself, formed by a polycarbonate sheet. The response of said monitor exploits the alpha tracks present into said polycarbonate sheet at such a depth that said tracks can only be induced by alpha particles from radon (and its decay products) absorbed by the polycarbonate sheet itself. Unfortunately, the use of the polycarbonate detector requires complex procedures for electrochemical track etching as reported in the Italian patent N° 929.339 deposited the 6th of July (1970), the inventor of which is one of the authors (LT) of the present invention. Furthermore said radon monitor presents several other drawbacks, such as low sensitivity, no fast-time response, and dependence of said response on the environmental temperature.

It would be highly advantageous to have very compact passive radon monitors with any desired sensitivity and time-response, with no dependence on environmental parameters, by exploiting the radon absorption in different solids layers, which could be used as radiators from which the escaping alpha particles (from radon and its decay products) are registered by any type of alpha particle detector.

The response of a radon monitor, formed by a track detector facing an absorptive radiator, could be altered by the presence of large relative humidity and/or when used for direct in-water measurements.

it would be highly advantageous if the response of said monitor could not be affected by the presence of large relative humidity and/or water by enclosing said monitor into an hermetically sealed plastic bag with large permeability to radon and low permeability to water, in a way similar to what was proposed in September 1985 by the Italian patent N° 48568/A for the protection from humidity of passive radon chambers, of which is inventor one of the author (LT) of the present invention.

## OBJECTS AND SUMMARY OF THE INVENTION

One object of the invention is to provide new methods and apparatus to obtain very compact passive radon monitors suitable for radon measurements indoors, in soil, in caves, in thermal spa, in water, and in water media.

It is another object of the present invention to extend the response linearity of all existing passive radon monitors based on track detectors.

The present invention is defined by the appended claims.

According to one embodiment of the invention, a new passive radon monitor is provided which consists of an alpha-particle track-detector facing a thin solid layer, with suitable radon-sorption characteristics.

Said layer represents a radiator, from which alpha particles from radon and its decay products may escape thus penetrating into the facing track detector, where they can be registered after a suitable etching.

Always according the present embodiment of the invention, the thickness of said radiator is chosen on the basis of the range of the alpha particles to be registered and the radon diffusion length in said radiator.

According to another embodiment of the invention, said track detector is faced to two different radiators in order to obtain a passive radon monitor with two different response sensitivities.

According to a further embodiment of the invention, the track detector facing at least one radon-sorption radiator is enclosed in a hermetically sealed plastic bag, characterised by a low permeability to water vapour and a relatively large permeability to radon.

Always according to the invention, the passive monitor response is dictated by the particular radon sorption processes exploited, which includes the radon sorption within the radiator bulk (absorption) or that onto the radiator surface (adsorption). For an equilibrium-absorption radiator, the partition coefficient of radon between said radiator and air is in the range from 1 to several hundreds.

For long-term radon measurements, the equilibrium radon absorption into thin-films of glassy plastics such as polycarbonate is proposed.

Always according to the invention, at nanoscale level the radon-sorption sites consist of nanometer-size pores, which are distributed within the radiator bulk (absorption) or onto the radiator surface (adsorption) as reported fow example by McKeon et al. (Polymers of intrinsic microporosity (PIMs): Bridging the void between microporous and polymeric materials., Chemistry - European Journal 11, 2610-2620 (2005)).

DETAILED DESCRIPTION OF THE PREFERRED EMBODIMENTS.

BRIEF DESCRIPTION OF THE FIGURES.

Although specific embodiments of the present invention will now be described with reference to the drawings, it should be understood that such embodiments are, by way of example, only and merely illustrative of but a small number of the many possible specific embodiments, which can represent applications of the principles of the present invention. Various changes and modifications obvious to one skilled in the art to which the present invention pertains are deemed to be within the scope of the present invention as further defined in the appended claims.

The drawings referred to herein will be understood as not being drawn to scale, the emphasis instead being placed upon illustrating the principles of the inventions.

Said drawings are reported by the following figures, wherein:

FIG. 1 is a cross sectional view of a passive monitor based on one absorption radiator and a track detector;

FIG. 2 is a cross sectional view of a diffusion chamber, in which the absorption radiator is facing the bottom surface of the track detector;

FIG.3 is a vertical cross-section view of a radon monitor with two radon absorptive radiators for long-term radon measurements indoors, in soil, and in water.

DETAILED DESCRIPTION OF THE INVENTION AND FIGURES PASSIVE MONITORS WITH INCREASED RESPONSE LINEARITY FOR LONG-TERM MEASUREMENTS.

Diffusion chambers with back-up monitors

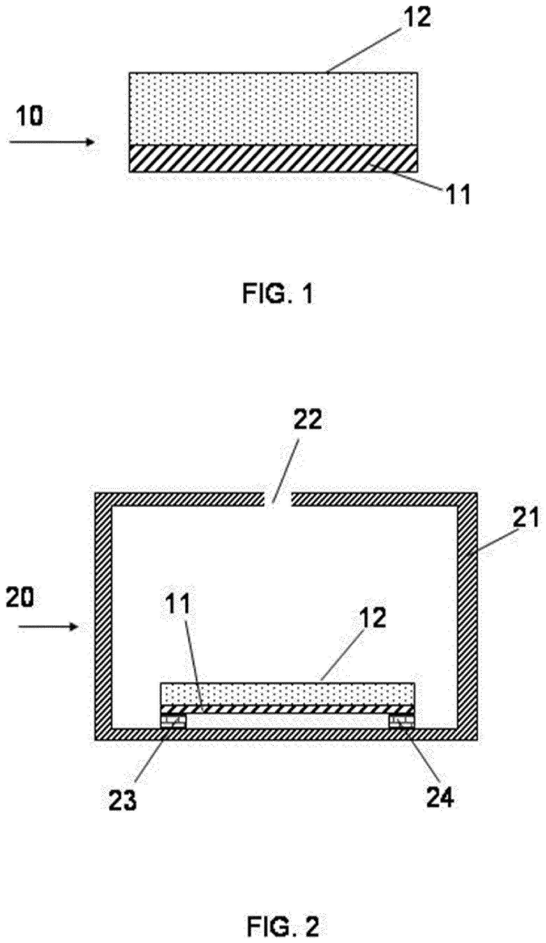

FIG. 1 illustrates a passive monitor 10 formed by a radon absorptive radiator 11 lying adjacent to an alpha track detecting material 12. The radon absorbed into 11 and its decay products emit alpha particles that strikes the detecting sheet 12 and produce tracks in said sheet, the counting of which, after a given etching, makes it possible to assess the average radon concentration on the basis of a suitable calibration.

By way of example, said radiators may consist of solid organic polymers, which contain a free volume, the extend of which depends on the morphological structure of the polymers.

A rubber-like polymer, has a free volume relatively large at high temperatures. Said free volume decreases with the decrease of the temperature until the glass-transition temperature is reached. Below said glass transition temperature, the polymer has a glassy-like structure, within which the free volume is relatively independent on temperature. Said free volume is made of nanocavities, which may enclose radon atoms. The number and the sizes of said nanocavities determine the solubility and the diffusion of the radon in the plastics. Said nanocavities are transient in rubber-like polymers, while they are relatively permanent in glassy polymers.

From what stated above, it appears clear that the glassy polymers are of greater interest as radiators, specially because they are characterized by a free volume formed by nanocavities, the number of which is relatively independent on the temperature. Alternatively, radiators with nanoholes, the number of which is little or no dependent on temperature may be obtained by amorphous plastics containing zeolites or activated carbon fibres, as for example reported by Chung et al. (Mixed matrix membranes (MMMs) comprising organic polymers with dispersed inorganic fillers for gas separation. Progress in Polymer Science 32 (2007) 483-507.

At the collective macroscopic level, it is the permeability, P, the most important parameter of a plastic film which depends on the solubility, S, and diffusion, D, of the radon in said film. Said permeability is given by the relation P=SD. Incidentally the solubility, S, is the partition coefficient of the radon between the radiator and the surrounding air under equilibrium absorption, as reported by Clever (Solubility data series. Vol. 2, Kripton, xenon and radon-gas solubilities. Oxford: Pergamon Press (1978))

The mean diffusion length of radon, **L**, in the absorptive material is the distance in a plastic material at which the Rn concentration is 37% of the concentration at the surface under steady-state conditions. Said diffusion length is given to a first approximation by

$$L = (D.\tau)^{1/2} \quad (1)$$

where $\tau$ is the mean radon-decay time-constant.

In order to obtain a radiator with uniform radon distribution, the thickness, **d**, of the absorptive radiator 11 from FIG. 1 must be much smaller than the diffusion length of radon in said material, **L.**

On the other hand, in order to obtain a radon monitor with fast time response, the time, T, for the radon to achieve equilibrium absorption into a radiator must be much smaller than the mean radon-decay time constant, $\tau$.

The time, T, required to achieve equilibrium absorption of radon into a plastic film with thickness, d, is given to a first approximation (as, for example, reported by Wojcik: "Measurement of radon diffusion and solubility constants in membrane". Nuclear Instruments and Methods in Physics Research B61 pp 8-11 (1991)), by:

$$T = d^2/6 \, D \quad (2)$$

In order to obtain the maximum response sensitivity, the radiator thickness, d, must be larger than the range of alpha particles in said radiator.

Alternatively, instead of thin films, it is possible to use relatively large thicknesses of a tissue-cloth formed by amorphous plastic fibres with microscopic diameters, characterised by surface-to-volume ratios similar to those of thin films.

In practice, when a radiator is placed against a track detector, the radon is absorbed into the radiator from both its surfaces. In such a case, the interface between said radiator and the track detector is always formed by air layers, within which radon can diffuse even if said layers are only tens of angstroms thick.

Said radon diffusion does not occur if said interface is filled with water, since the diffusion constant , D, of radon in water is about 10000 times smaller than that in air.

From equation 2 it is possible the choose the radiator thickness, d , in such a way that the absorption time, T, results much smaller than the mean radon-decay time-constant, $\tau$. Said thickness may be less than the alpha-particle range in the radiator film.

In order to obtain a radiator with thickness larger than the range of alpha particles to be registered, it is possible to add one or more layers of the same material or a different material with known characteristics of radon diffusion and solubility.

Because of the diffusion of radon within a two-films interface, the use of multiple radiators allows to obtain any desired total thickness without increasing the time necessary to achieve the radon absorption under equilibrium conditions.

In case of equilibrium absorption of radon into the radiator (i.e. when using an absorption layer with a thickness, d, much less than the mean diffusion length, L) the response of said monitor is proportional to the amount of radon absorbed in the radiator, **$Q_{ab}$,** which is given by:

$$Q_{ab} = SA_0dCo \qquad (3)$$

Where **S** is the solubility of radon in the radiator 11, **$A_0$** the surface area of said radiator, and **Co** is activity-concentration of the radon in air.

Under said conditions of equilibrium absorption, the radon monitor response is proportional to the activity concentration, Co, of radon in air.

FIG. 2 is a cross-sectional view of a diffusion chamber. Said diffusion chamber may have any possible geometry and any type of diffusion barrier such as one or more holes with or without an air filter. Said diffusion chamber can be any of the diffusion chambers used already for passive radon monitors. Said diffusion chambers are exemplified in Fig. 2 by a cylinder casing 21 and a hole 22 through which radon can diffuse into the said chamber. Case 21 is actually formed by two parts (which are not shown in Figure 2) needed to have access to the inner volume of said diffusion chamber. The top surface of the track detecting sheet 12 is used for the detection of alpha particles from radon and its decay products from within said diffusion chamber. The back surface is used for the registration of alpha particles from radon and its decay products escaping the absorptive radiator 11. The spacers 23 and 24 produce an air layer between the bottom of the passive chamber housing 21 and the back surface of the absorptive material 11. The apparatus shown in FIG. 2 provides two different detector responses. One of said responses is obtained with the top detector surface as typically obtained in all passive radon chambers used to date. The back surface of the track detector 12 facing the absorptive radiator 11 represents a back-up detector which, by way of example, may have a response of about a factor of ten lower than that of the passive chamber. At relatively high radon exposures, the track density on the top surface may be to large to be counted, in which case the track counting on the back surface of said detector becomes highly valuable to extend the linearity of the response of the passive radon monitor.

Alternatively, the absorption layer can be positioned adjacent to a portion of the top detector surface, while the rest of said surface remains exposed to alpha particles from the diffusion chamber. Thereafter the alpha-track counting on only one surface provides two different response-sensitivities thus increasing the response linearity of the passive radon monitor.

Passive monitors with two absorptive radiators.

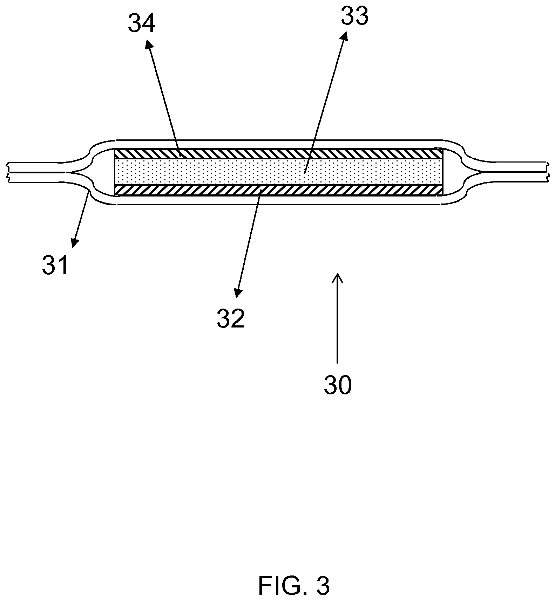

FIG. 3 is a vertical cross-section view of the passive monitor, 30, designed to enable the measurement of large radon exposures with two different response sensitivities, thanks to the use of the two absorptive materials 32 and 34, facing the two surfaces of the track detector 33. Said radon monitor is protected by an hermetically sealed bag of a plastic film with a low permeability to water vapour and a relatively large permeability to radon, as required for measurements in hostile environments, such in thermal spa, in caves, in soil, and in aqueous media. According to Fig. 3, the various components of said radon monitor are formed by a sheet of alpha track detecting material 33 sandwiched between two layers of radon absorptive materials 32 and 34 with different radon absorption characteristics, and an hermetically sealed bag, 31. In case only one radiator is used facing only one of the surfaces of the track detector, the opposite detector surface would always register alpha particles escaping any material which comes in contact with said surface. Even if the material facing the said detector-surface is a non-porous metal with no radon solubility (S=0), said surface will still register tracks, due to the radon absorbed in the detector itself.

The two radiators 32 and 34 are chosen in such a way to obtain two different response sensitivities. Alternatively, instead of facing the two opposite surfaces of the track detector, said radiators 32 and 34 can be placed side by side on only one of the surfaces of the track detector.

In order to obtain fast time response and/or a uniform radon distribution within the radiator bulk, the thickness of each absorptive radiators 32 and 34 must be much less than the diffusion length, L, of radon in the material being considered. The radon and its decay products captured either in 32 or 34 emit alpha particles that strikes the adjacent surface of detecting sheet 33 and produce tracks on said surface, the counting of which, after etching, makes it possible to assess the average radon concentration on the basis of a suitable calibration. The linearity of the response of said passive monitor can cover a wide range of radon exposures provided that the two different absorptive materials 32 and 34 are properly chosen. The bag 31 can be made of films of polyethylene or polyvinylchloride or polypropylene. For radon measurements in the presence of large relative humidity and/or for measurements directly in water, it is necessary that no water vapour and/or no water permeates said bag.

Once the said plastic bag is hermetically sealed, the concentration of radon inside said bag, $C_i$, is, to a first approximation, related to that outside ,Co, under equilibrium conditions by following equation:

$$C_i/C_o = 1/(1 + \tau_p / \tau) \quad (4)$$

Where $\tau$, is the mean radon-decay time constant, while $\tau_p$ is the mean permeation time of the radon into the bag which is given, to a first approximation, by:

$$\tau_p = Vd/A_1P \quad (5)$$

where V is the bag volume, while d, $A_1$, and P are respectively the thickness, the surface area of the plastic bag, and the permeability coefficient of the plastic-bag wall. The bag volume, V, is essentially determined by the absorptive layers 32 and 34 with the detector sheet 33 in between, and a remaining air volume within the bag, $V_b$. While the detector volume can be considered negligible, the volume of a radiator is in practice an equivalent volume, $V_e$, which represents the air-equivalent volume containing the same quantity of radon activity of that of said radiator and is given by:

$$V_e = A_od S \quad (6)$$

Where $A_o$ and d and S are respectively the surface area, the thickness , and the solubility of said radiator.

The total bag volume is then given by:

$$V = V_b + V_e = V_b + A_od S \quad (7)$$

The total response-time, $T_{total}$, of the passive radon monitor enclosed in an hermetically sealed bag is, to a first approximation, given by the sum of the mean permeation time , $\tau_p$, of the radon into said bag and the mean absorption time, T, through said radiator, reported above in equation 2, as in the following:

$$T_{total} = \tau_p + T = Vd/PA_1 + d^2/6 D \quad (8)$$

In equation 8, it is the absorption time, T, which is the dominant quantity, while the mean permeation time, $\tau_p$, can acquire relatively small values through a proper choice of the bag parameters

In order to obtain a radon monitor with fast response with no loss of radon during the permeation processes, the total response time $T_{total}$, should be much smaller than the mean decay-time constant of radon, $\tau$ ($T_{total} << \tau$).

EXAMPLES

The new methods and apparatus for the measurements of radon concentration indoors, in soil, and in water are valid for all the types of alpha particle detectors of the radiations emitted from radon and its decay products. In the examples reported in the following, only track detectors known as CR-39 (registered trademark of the Pittsburg Glass Co.) are used.

Said detectors are formed by sheets of thermoset plastics, characterized by a large registration sensitivity for alpha particles and a very compact molecular structure, which is responsible for the low radon sorption into said plastics. Both these characteristics of large sensitivity and low radon absorption are of great interest for the use of said CR-39 sheets in combination with radiators with partition coefficients of radon sorption (under equilibrium conditions) from 1 up to several thousands.

EXAMPLE N° 1: Track detectors as absorptive radiators.

Table 1 reports the results obtained by using a CR-39 track detector facing different types of plastic radiators, which are typically used for alpha particle registration.

In one particular case, the CR-39 sheets have been used both as detectors and as radiators.

A two-weeks exposure of the monitors listed in table 1 has been made at a concentration of about 70 kBq/m3 in the air above the level of the water of a deep well. Each passive monitor has been enclosed in a heat sealed polyethylene bag, with an total radon permeation time, $T_{total}$, of less than 3 hours. The response of these passive monitors is reported in Table 1 in terms of surface track density (Tacks/cm2) per unit of radon exposure (kBq.h/m3). The response of the CR-39 facing a non-porous sheet of Cupper (with radon solubility, S=0) represents the intrinsic response of the monitor, due to the radon absorption in the CR-39 sheet itself. When said CR-39 is used both as detector and as radiator the response then is double of that of CR-39 facing a cupper radiator. The largest response is encountered when using polycarbonate as radiator. Among all the track-detector plastics, listed in table 1, the CR-39 appears clearly of interest as detector, while the polycarbonate results very attractive as radiator.

**Table 1**

| Detector | Radiator | Radiator thickness $\mu$m | Response Tracks.m$^3$/(cm$^2$.kBq.h) |
|---|---|---|---|
| CR-39 | Cupper sheet | 200 | 0.010 ± 0.002 |
| CR-39 | CR-39 | 1000 | 0.02 ± 0.003 |
| CR-39 | Cellulose nitrate | 200 | 0.04 ± 0.01 |
| CR-39 | Polycarbonate | 500 | 0.14 ± 0.03 |

Pressianov et al. in the cited reference have proposed the use of a polycarbonate sheet both as a radiator and a track detector.

With said monitor, it is possible to measure accurately the radon concentration only if the average exposure temperature is known. From the data reported by Pressianov et al in the above cited reference, it has been possible to derive the mean diffusion length of the radon gas in polycarbonate, which varies from 45 $\mu$m at 5 °C to about 90 $\mu$m at 38 °C. Moreover from the same data it has been possible to derive the mean time needed to achieve the radon equilibrium absorption in a 500 $\mu$m-thick polycarbonate listed in table 1. Said mean time, T, is of 115 days at 5°C and 30 days at 38 °C.

EXAMPLE N° 2. Passive monitors with absorption radiators with fast response.

In order to obtain a fast response-time for passive monitors with absorptive radiators, i.e. a time T much smaller than the mean radon-decay time constant, it is necessary to use very thin films, as it can be derived from equation 2 reported above. With a 20 $\mu$m-thick polycarbonate film, the mean time to achieve radon absorption under equilibrium conditions is less than 3 hours at temperatures from 5°C up to 38 °C. Since the alpha particle range in polycarbonate is about 64 $\mu$m, in order to obtain the largest response sensitivity, it is necessary to use polycarbonate radiators with thickness not less than said alpha particle range. A radiator with a total thickness of 80 $\mu$m, if obtained with a stack of 4 films with thickness of 20 $\mu$m, is characterized by a mean equilibrium absorption time, T, similar to that of a single 20 $\mu$m-thick film, thanks to the diffusion of radon along any two-films interface. Table 2 reports the responses of passive monitors obtained with multiple radiators of 20 $\mu$m thick polycarbonate films, commercially known as Makrofol N (registered trademark from Bayer AG).

As it appears clear from table 2, when the total thickness is less than the range of the most energetic alpha particles, which is about 64 $\mu$m, the response sensitivity increases with the thickness. For radiators with thickness greater than said alpha-particle range, the response reaches a plateau value. The radon absorption in the radiators listed in Table 2 occurs in a few hours, i.e. in a time much shorter than the mean radon-decay time constant, $\tau$ (132 hours).

Any stack of 20 $\mu$m-thick polycarbonate films with a total thickness greater than the mean radon diffusion length, provides a radiator with fast radon absorption and an homogeneous radon distribution within said radiator.

**Table 2**

| Radiator | Thickness [$\mu$m] | Response [Tracks.m$^3$/(cm$^2$. kBq.h)] |
|---|---|---|
| **Cupper sheet** | ------ | **0.010 $\pm$ 0.002** |
| **1 Polycarbonate film** | **20** | **0.18 $\pm$ 0.01** |
| **2 Polycarbonate films** | **40** | **0,.30 $\pm$ 0.02** |
| **3 Polycarbonate films** | **60** | **0.40 $\pm$ 0.05** |
| **4 Polycarbonate films** | **80** | **0.40 $\pm$ 0.05** |

EXAMPLE N° 3: Response of the passive monitors versus the thickness of the absorptive radiators.

Table 3 reports the response of amorphous polycarbonate films known as Makrofol DE (registered trademark from Bayer AG).

The response of radiators formed by multiple thin films with thickness of 30 $\mu$m and 50 $\mu$m is the largest, since the radon absorption reaches the equilibrium in a time much shorter than the mean radon-decay time, $\tau$.

**Tabella 3**

| Radiator | Total thickness [$\mu$m] | Response [Tracks.m$^3$/(cm$^2$. kBq.h)] |
|---|---|---|
| **3 x(30 $\mu$m-thick film)** | **90** | **0.35 $\pm$ 0.05** |
| **2 x(50 $\mu$m-thick film)** | **100** | **0.36 $\pm$ 0. 06** |
| **1 Film** | **125** | **0.16 $\pm$ 0.05** |
| **1 Film** | **250** | **0.20 $\pm$ 0.05** |
| **1 Film** | **370** | **0.21 $\pm$ 0.05** |
| **1 film** | **500** | **0.15 $\pm$ 0.04** |

For what concerns radiators with thickness greater than the radon mean free path, the response should decrease with the increase of said thickness. As it appears clear from Table 3, said response decreases by a factor of 2 starting with a thickness of 125 $\mu$m and remains the same within one standard deviation up to a thickness of 500 $\mu$m. Said constant response for different radiators thicknesses can be explained by the fact that the radon diffuses freely along any plastic interface. For this reason, the passive monitor response is essentially due to the radon absorbed at the surface of the radiator facing the track detector.

EXAMPLE N° 4. Passive monitors with rubber-types or glass-types of radiators.

Table 4 reports the results obtained with radiators made of rubber-types of plastics (characterized by a glassy transition temperature, Tg, smaller than the environmental temperature) and glass-types of plastics (characterized by a glassy transition temperature, Tg, larger than the environmental temperature).

In particular, Table 4 lists the responses due to different radiators together with their glass transition-temperature (Tg), solubility (S), and diffusivity (D) as reported by the Doctorate thesis of Muller from the university of Heiderberg (Die Diffusions, Loeslichkeits- und Permabilitaetskoeffizienten von Radon-22 in Handelsueblichen Kunststoffen). The thickness, which is the same for all the radiators of said table, has been chosen in order to ensure a fast time, T, to reach equilibrium absorption of radon.

From table 4 it appears clear that the response sensitivity is closely related to the radon solubility. This occurs since the solubility, S, is the partition coefficient (under equilibrium conditions) of radon between the plastics and the surrounding air, which is considered to have a value of S=1. Incidentally, the intrinsic response of CR-39 has a value of 0.01 Tracks.m$^3$/(cm$^2$.kBq.h), which can be explained as due to a radon solubility for CR-39 of 1, i.e. equal to that of air.

It is for these reasons, that the ratio of each response of the passive monitors of Table 4 with the intrinsic CR-39 response is, within one standard deviation, equal to the solubility, S, of the plastics used for the radiator.

The polycarbonate presents a relatively large response, which is due to its large solubility. Since said polycarbonate is a glass-type of polymer, its radon solubility is little or no dependent on the temperature.

Said characteristics of large solubility with little dependence on temperature make the polycarbonate very attractive as a radiator for passive radon monitors.

There other glass-types of polymers with a glass transition temperature similar to that of polycarbonate, such as polysulfone, polyarilate , etc

Different polymers may have the same morphological structure, which depends on the polymerization processes, on the thermal history, and on the aging. Polymers with the same morphological structure may be characterized by the same radon absorption characteristics.

As already stated above, the polymers with a glass transition temperature smaller than the environmental temperature are rubber-types of polymers. Said polymers can be considered as organic liquids, in which the molecules are relatively free to move. In said polymers, the radon diffusivity and the solubility may strongly depend on temperature. Said characteristics makes the rubber plastics of minor interest for their use as radiators.

**Table 4**

| Radiator | Tg [°C] | Thickness [$\mu$m] | Response [Tracks.m$^3$ / (cm$^2$. kBq.h)] | Solubility-S | Diffusivity-D [x10$^8$cm2/s] |
|---|---|---|---|---|---|
| Cupper sheet | ------ | 200 | 0.010 ± 0.002 | S=0 | ----------- |
| Polyetylene | -100 | 80 | 0.04 ± 0.01 | 4 ± 2 | 4.0 ± 0.6 |
| Polydimetilsiloxane | -120 | 75 | 0.14 ± 0.03 | 17 ± 2 | 260 ± 60 |
| 4 Polycarbona te Films | +150 | 80 | 0.41 ± 0.05 | 45 ± 4 | 0.0086 ± 0.0007 |

However, rubbers are characterized by a large radon permeability, P (P=SD), and they are thus of interest for obtaining airtight and water proof heat-sealed bags, which are needed for the protection of passive radon monitors from humidity.

With said rubber materials it is possible to obtain airtight bag for which the time, $\tau_p$, for the radon permeation into the bag, is much smaller than the mean radon-decay time constant, $\tau$. In this case, the radon permeation into the bag occurs under equilibrium conditions and the radon concentration in the bag is equal to that outside.

With $\tau_p << \tau$, any change of the permeability costant, P, of the plastics of the bag, due to a temperature variation, will not affect the response of the passive radon monitor.

By way of example, a bag of 40 $\mu$m-thick amorphous polyethylene with an inner volume formed essentially by the volume of the track detector and by the equivalent volumes, Ve, of the radiators used, the mean permeation time, $\tau_p$, of the radon into said bag is about 2 hours, which is much smaller of the mean radon-decay time constant, $\tau$ (132 hours).

EXAMPLE N° 5: Passive monitors for in-water radon measurements.

Passive radon monitors with a radiator formed by 4 polycarbonate films with a thickness of 20 $\mu$m facing a CR-39 detector, have been protected respectively by heat-sealed 40 $\mu$m-thick polyethylene bags and with polyvinyl chloride adhesive films.

Said passive monitors have been exposed for two weeks respectively in the water at 16 °C and in the air of a closed water well, in which the radon concentration was in equilibrium with that of the water.

The results for the in-air exposure of passive monitors protected with hand-held polyethylene bags have been the same, within one standard deviation, of those protected with adhesive tapes. By contrast, for the in-water exposure, the passive monitors, protected by adhesive tapes have been altered by the presence of the water with said monitors. For what concerns the exposure in water of the monitors protected by heath-sealed polyethylene bags, the results obtained have been the same of those expected on the basis of the radon solubility in water at 16 °C , as reported by Clever (Krypton, Xenon-, Radon-gas solubilities. In "Solubility Data Series." Vol. 2, p 217-237. Pergamon Press, Oxford 1985). In particular, the ratio between the radon concentration measured in water and that in air has resulted equal to 0.30±0.05, which is the typical partition coefficient expected under equilibrium conditions between the radon in water and that in air at the above said temperature.

EXAMPLE N° 6: Radiators with different morphological structures.

Organic polymers with compact structure as thermosets are characterized by a low radon diffusivity and thus a low radon-absorption. In Table 5, two different thermosets radiators are listed which are made respectively of CR-39 and Novolac (registered trademark from Nippon Kynol Inc.). Another characteristic, which is responsible for low radon absorption is the polymer crystallinity, such as that encountered with polyethylene therephtalate. One radiator of Table 5 is a film of Mylar B (a registered trademark of Du Pont de Nemours), which is a polyethylene therepthalate with large percentage of crystallinity. The radiators of Table 5, even though they are all polyesters, they are characterised by very different morphological structures. Table 5 clearly shows that thermoset and crystalline radiators are characterized by a very low response, because of their low radon absorption.

A relatively large response is encountered with the Novolac thermoset.

Said Novolac is a tissue of microfibers with a diameter of about 10 microns. Even though the thickness of said tissue is about 600 $\mu$m, it is the 10 $\mu$m diameter of the fibre, which should be taken in consideration for the evaluation of the mean time, T, required for the radon to reach the equilibrium absorption. Because of these fibre microscopic-sizes, the absorption of radon in said radiator occurs under equilibrium conditions and is relatively large as shown in Table 5.

**Table 5**

| Radiator | Thickness ($\mu$m) | Structure | Response [Tracks.m$^3$/(cm$^2$. kBq.h)] |
|---|---|---|---|
| CR-39 | 1000 | Thermoset | 0.02 ± 0.003 |
| Mylar B | 75 | Crystalline | 0.02 ± 0.003 |
| Novolac | 600 | Thermoset | 0.14 ± 0.02 |

Extensive investigations have been made on different types of amorphous plastics, and for a given plastics under different thermal histories and/or morphological structures. Absorptive plastics are typically characterized by a partition coefficient at equilibrium (and/or solubility S) with values up to about 100.

Radiators with radon partition coefficients under equilibrium conditions greater than 100 can be easily obtained only by adsorptive radiators.

The preferred embodiments of this invention have been hereinbefore described and some variations of this invention have been suggested, but it should be understood that modifications and changes can be made by those skilled in the art without so departing from the protection scope as defined by the annexed claims.

REFERENCES CITED

Patent Documents

| | | |
|---|---|---|
| Italian Patent N° 51929 | 10/1970 | L. Tommasino |
| Italian Patent N° 48568A/85 | 9/1985 | L Tommasino |
| Slovenian Patent N° 9111472 | 9/1991 | S. Sutej |
| U.S. Patent N° 3769144 | 10/1973 | J. Economy |
| U.S. Patent N° 5065030 | 11/1991 | D. Perlman |

Other Pubblications

T. D. Burchell and R.R. Judkins (A novel carbon fiber based material and separation technology. Energy Conservation and Management, 38 Supplement S99-S104 (1997)

H.L. Clever. Solubility data series. Vol. 2, Kripton, xenon and radon-gas solubilities. Oxford: Pergamon Press (1978)

Csige, and S. Csegzi. The Radamon radon detector and an example of application. Radiation Measurements 34, pp 437-440 (2001).

T. S. Chung, L.Y. Jiang, Y. Li, S. Kulprathipanja. Mixed matrix membranes (MMMs) comprising organic polymers with dispersed inorganic fillers for gas separation. Progress in Polymer Science 32, 483-507 (2007).

R. L. Fleischer. Radon in the Environment-Opportunities and Hazards. Nuclear Tracks and Radiation Measurements. Vol. 14, N° 4, pp 421-435 (1988).

D. Mazur, M. Janik, J. Loskiewicz, P. Olko and J. Swakon. Measurements of radon concentration in soil gas by CR-39 detectors. Radiation Measurements 31, pp 295-300 (1999).

N. B. Mckeown et al. Polymers of intrinsic microporosity (PIMs): Bridging the void between microporous and polymeric materials., Chemistry - European Journal 11, 2610-2620 (2005).

H. More and L.H. Hubbard. 222Rn absorption in plastic holders for alpha track detectors: a source of error- Radiation Protection Dosimetry. Vol. 71, pp85-91 (1997).

F. Muller. Doctorate thesis in German from the university of Heiderberg (Die Diffusions, Loeslichkeits- und Permabilitaetskoeffizienten von Radon-22 in Handelsueblichen Kunststoffen).

D. Pressianov, J. Buysse, A. Poffijin, G. Meesen, and A. Van Deynse. The compact disk as radon detector-A laboratory study of the method. Health Physics, 64, pp 642-651 (2003).

Scarpitta. A new beaded carbon molecular sieve sorbent for 222Rn monitoring. Health Physics. Vol. 70, pp 673-679 (1996).

Sun et al. Field comparison of measurements of commercially available short-term radon detectors. Health Physics, Vol. 91, pp 221-226 (2006).

A. B. Tanner. Error in measuring radon in soil gas by means of passive detector. Nuclear Geophysics Vol. 5, pp25-30 (1991)

L. Tommasino, Radon monitoring by alpha track detection. Nucl. Tracks Radiat. Meas. 17, pp 43-48 1990.

L. Tommasino. Passive sampling and monitoring of radon and other radioactive and/or toxic gases. Radiation Protection Dosimetry Vol. 78, pp 55-58 (1998).

L. Tommasino. Personal dosimetry and area monitoring for neutrons and radon in workplaces. Radiation Measurements 34, pp 449-456 (2001)L.Tommasino, Radiochemical Methods: Radon. Encyclopedia of Analytical Science. 2nd Edition pp 32-44 Edited by P. Worsfold, A.Townsend and C. Poole Elsevier Limited, Oxford (2005).

A. Van Deynse, C. Cosma, and A. Poffijn (1999). A passive radon dosimeter based on the combination of a track etch detector and activated charcoal Radiation Measurements 31 pp 325-330.

M. Wojcik. Measurement of radon diffusion and solubility constants in membrane. Nuclear Instruments and Methods in Physics Research B61 pp 8-11 (1991).

**Claims**

1. A passive monitor (10) for long-term radon-measurements, based on a radon-absorption layer of solids, suitable to obtain a back-up detector for existing passive radon-monitoring chambers in order to enhance their response linearity, comprising:

   - a sheet (12) of plastics for detecting tracks of alpha particles;
   - a thin solid radiator-layer (11) having a radon-partition coefficient, related to air, under equilibrium-absorption conditions in the range of values from 1 to about a few hundreds;
   - a passive radon diffusion chamber (20) which retains said absorptive radiator on one of its inner surfaces;
   - said track detector having one of its surfaces facing said layer, while the opposite surface of said detector facing the inner volume of the diffusion chamber.

2. A passive radon monitor, as described in claim 1, wherein said absorption layer has sufficiently small thickness to ensure the achievement equilibrium-type of radon absorption in a time much shorter than the mean radon decay time.

3. A passive radon monitor of claim 1 wherein said layer, when having a thickness less than the range of the most energetic alpha particles, is supplemented by an additional layer of material.

4. A passive radon monitor, as described in claim 1, wherein said absorption layer is made of a film of glassy amorphous plastics.

5. A passive radon monitor, as described in claim 1, wherein said absorption layer is made of mixed matrix membranes, comprising organic polymers with dispersed molecular sieves.

6. A method for the long-term measurements of the radon concentration with a passive radon chamber (10) with two response-sensitivities, as described in claim 1, comprising:

   - exposing the passive radon chamber (10) to the unknown radon atmosphere;
   - forming tracks on the surface of a detector (12) from alpha particles emitted by radon and its decay products within the diffusion radon chamber;
   - forming tracks on the detector (12) surface from the alpha particles emitted by radon and its decay products from the absorptive layer facing said surface;

- developing said track detector by a suitable etching to enlarge the track sizes to facilitate their counting;
- calculating the average radon concentration by a suitable calibration from the track density from the detector surface facing the inner volume of the diffusion chamber;
- calculating the average radon concentration by a suitable calibration from the track density from the detector surface exposed against the absorptive radiator;
- evaluating the mean concentration value between the two said values of radon concentration.

7. A compact passive monitor (30) for the long-term radon-measurements with two response-sensitivities, obtained by using two radon-absorption layers comprising:

- a sheet (33) of plastics for the registration alpha-particle tracks;
- two layers (32, 34) of radon absorptive materials facing said track detector (33), said layers having two different radon-partition coefficients at equilibrium to provide two different detector-responses with desired sensitivities;
- an hermetically sealed bag (31) with large permeability to radon and low permeability to water vapour to protect said absorptive layers together with the track detector in between from humidity and/or water.

8. A passive radon monitor as described in claim 7, wherein each of said absorptive materials has a thickness greater than the range of the alpha particles to be detected.

9. A passive radon monitor as described in claim 7, wherein each of said absorptive materials has a sufficiently small thickness in order to achieve an equilibrium-type of radon absorption in a time much smaller than the mean radon decay time.

10. A passive radon monitor of claim 7, wherein said hermetically sealed bag is provided by two adhesive tapes in juxtaposition;

11. A passive radon monitor as described in claim 7, wherein said bag is a heat-sealed bag made of plastics with a large permeability to radon and a small permeability to water vapour.

12. A passive radon monitor as described in claim 7, wherein said hermetically sealed bag has such characteristics to ensure that the mean permeation time of radon into said bag when added to the mean radon absorption time of one or the other absorptive layer, results much smaller than the mean radon decay time.

13. A method for the long-term measurements of radon concentrations in confined environments, in soil, and in water by a passive monitor (30) with two responses sensitivities, as described in claim 7, comprising:

- exposing said passive monitor (30) to the unknown radon atmosphere;
- forming tracks on the surface of a detector (33) from alpha particles emitted by radon and its decay products captured onto one of the absorptive layer (32, 34) adjacent to said detector surface;
- forming tracks on the remaining surface of said detector (33) from the alpha particles emitted by radon and its decay products captured onto the other absorptive radiator, adjacent to said detector surface;
- developing said track detector by etching to facilitate the track counting;
- calculating the radon concentration on the basis of a suitable calibration from the track density on the detector surface facing one of the absorption radiator;
- calculating the radon concentration on the basis of a suitable calibration from the track density from the remaining surface of said track detector facing the other absorption layer;
- evaluating the mean concentration value between two said values of the radon concentration.

## Patentansprüche

1. Passiver Monitor (10) für langfristige Radonmessungen auf Basis einer Radonabsorptionsschicht von Festkörpern, geeignet zum Erhalten eines Backup-Detektors für bestehende passive Radonüberwachungskammern, um deren Reaktionslinearität zu verbessern, umfassend:

- eine Platte (12) aus Kunststoff zum Erkennen von Spuren von Alphapartikeln;
- eine dünne, feste Kühlerschicht (11) mit einem Radonverteilungskoeffizienten, bezogen auf Luft, unter Gleichgewichtsabsorptionsbedingungen in dem Bereich von Werten von 1 bis etwa ein paar Hundert;

- eine passive Radondiffusionskammer (20), welche den absorbierenden Kühler auf einer ihrer inneren Oberflächen beibehält;
- wobei der Spurendetektor eine seiner Oberflächen der Schicht zugewandt hat, während die gegenüberliegende Oberfläche des Detektors dem inneren Volumen der Diffusionskammer zugewandt ist.

2. Passiver Radonmonitor nach Anspruch 1, wobei die Absorptionsschicht eine ausreichend geringe Dicke hat, um den Gleichgewichtserreichungstyp von Radonabsorption in einer Zeit zu gewährleisten, welche viel kürzer ist als die mittlere Radonzerfallszeit.

3. Passiver Radonmonitor nach Anspruch 1, wobei die Schicht, wenn sie eine Dicke weniger als der Bereich der am meisten energetischen Alphapartikel hat, mittels einer zusätzlichen Schicht von Material ergänzt wird.

4. Passiver Radonmonitor nach Anspruch 1, wobei die Absorptionsschicht aus einem Film von glasartigem amorphem Kunststoff hergestellt ist.

5. Passiver Radonmonitor nach Anspruch 1, wobei die Absorptionsschicht aus Membranen mit gemischter Matrix, welche organische Polymere mit dispergierten Molekularsieben umfassen, hergestellt ist.

6. Verfahren für die langfristigen Messungen der Radonkonzentration mit einer passiven Radonkammer (10) mit zwei Reaktionsempfindlichkeiten nach Anspruch 1, umfassend:

- Bestrahlen der passiven Radonkammer (10) mit der unbekannten Radonatmosphäre;
- Bilden von Spuren von Alphapartikeln, welche von Radon und dessen Zerfallsprodukten innerhalb der Diffusionsradonkammer abgestrahlt werden, auf der Oberfläche eines Detektors (12);
- Bilden von Spuren von den Alphapartikeln, welche von Radon und dessen Zerfallsprodukten von der absorbierenden Schicht, welche der Oberfläche zugewandt ist, abgestrahlt werden, auf der Detektoroberfläche (12);
- Entwickeln des Spurendetektors mittels geeignetem Ätzen, um die Spurengrößen zu vergrößern, um deren Zählung zu vereinfachen;
- Berechnen der durchschnittlichen Radonkonzentration mittels einer geeigneten Kalibrierung von der Spurendichte von der Detektoroberfläche, welche dem inneren Volumen der Diffusionskammer zugewandt ist;
- Berechnen der durchschnittlichen Radonkonzentration mittels einer geeigneten Kalibrierung von der Spurendichte von der Detektoroberfläche, welche gegen den absorbierenden Kühler bestrahlt wird;
- Beurteilen des mittleren Konzentrationswerts zwischen den zwei Werten von Radonkonzentration.

7. Kompakter passiver Monitor (30) für die langfristigen Radonmessungen mit zwei Reaktionsempfindlichkeiten, welche mittels Verwenden von zwei Radonabsorptionsschichten erhalten werden, umfassend:

- eine Platte (33) aus Kunststoff für die Registrierung von Alphapartikelspuren;
- zwei Schichten (32, 34) von Radon absorbierenden Materialien, welche dem Spurendetektor (33) zugewandt sind, wobei die Schichten zwei unterschiedliche Radonverteilungskoeffizienten bei Gleichgewicht aufweisen, um zwei unterschiedliche Detektorreaktionen mit gewünschten Empfindlichkeiten bereitzustellen;
- einen hermetisch versiegelten Beutel (31) mit großer Permeabilität zu Radon und niedriger Permeabilität zu Wasserdampf, um die absorbierenden Schichten zusammen mit dem Spurendetektor dazwischen vor Feuchtigkeit und/oder Wasser zu schützen.

8. Passiver Radonmonitor nach Anspruch 7, wobei jedes der absorbierenden Materialien eine Dicke größer als der Bereich der zu erkennenden Alphapartikel hat.

9. Passiver Radonmonitor nach Anspruch 7, wobei jedes der absorbierenden Materialien eine ausreichend geringe Dicke hat, damit ein Gleichgewichtstyp von Radonabsorption in einer Zeit gewährleistet wird, welche viel kleiner ist als die mittlere Radonzerfallszeit.

10. Passiver Radonmonitor nach Anspruch 7, wobei der hermetisch versiegelte Beutel mittels zwei Klebebändern in Gegenüberstellung bereitgestellt ist.

11. Passiver Radonmonitor nach Anspruch 7, wobei der Beutel ein heißversiegelter Beutel, hergestellt aus Kunststoff, mit einer großen Permeabilität zu Radon und einer kleinen Permeabilität zu Wasserdampf ist.

**12.** Passiver Radonmonitor nach Anspruch 7, wobei der hermetisch versiegelte Beutel solche Merkmale aufweist, um zu gewährleisten, dass die mittlere Permeationszeit von Radon in diesem Beutel, wenn zu der mittleren Radonabsorptionszeit von einer oder der anderen absorbierenden Schicht addiert, viel kleiner resultiert als die mittlere Radonzerfallszeit.

**13.** Verfahren für die langfristigen Messungen von Radonkonzentrationen in geschlossenen Umgebungen, in Erde und in Wasser mittels eines passiven Monitors (30) mit zwei Reaktionsempfindlichkeiten nach Anspruch 7, umfassend:

- Bestrahlen des passiven Monitors (30) mit der unbekannten Radonatmosphäre;
- Bilden, auf der Oberfläche eines Detektors (33), von Spuren von Alphapartikeln, welche von Radon und dessen Zerfallsprodukten abgestrahlt werden, welche auf einer von der absorbierenden Schicht (32, 34), welche zu der Detektoroberfläche benachbart ist, erfasst werden;
- Bilden, auf der verbleibenden Oberfläche des Detektors (33), von Spuren von Alphapartikeln, welche von Radon und dessen Zerfallsprodukten abgestrahlt werden, welche auf dem anderen absorbierenden Kühler, welche zu der Detektoroberfläche benachbart ist, erfasst werden;
- Entwickeln des Spurendetektors mittels Ätzen, um die Spurenzählung zu vereinfachen;
- Berechnen der Radonkonzentration auf Basis einer geeigneten Kalibrierung von der Spurendichte auf der Detektoroberfläche, welche einem der Absorptionskühler zugewandt ist;
- Berechnen der Radonkonzentration auf Basis einer geeigneten Kalibrierung von der Spurendichte von der verbleibenden Oberfläche des Spurendetektors, welche der anderen Absorptionsschicht zugewandt ist;
- Beurteilen des mittleren Konzentrationswerts zwischen den zwei Werten von der Radonkonzentration.

## Revendications

**1.** Moniteur passif (10) pour des mesures de radon à long terme, sur la base d'une couche d'absorption de radon de solides, approprié pour obtenir un détecteur de secours pour des chambres de contrôle de radon passives existantes afin d'améliorer leur linéarité de réponse, comprenant :

- une feuille (12) de plastique pour détecter des traces de particules alpha ;
- une couche d'élément rayonnant solide mince (11) ayant un coefficient de séparation de radon, lié à l'air, dans des conditions d'absorption d'équilibre dans la plage de valeurs de 1 à environ quelques centaines ;
- une chambre de diffusion de radon passive (20) qui retient ledit élément rayonnant absorbant sur une de ses surfaces intérieures ;
- ledit détecteur de traces ayant une de ses surfaces faisant face à ladite couche, alors que la surface opposée dudit détecteur fait face au volume intérieur de la chambre de diffusion.

**2.** Moniteur de radon passif, tel que décrit dans la revendication 1, dans lequel ladite couche d'absorption a une épaisseur suffisamment petite pour garantir la réalisation du type équilibre d'absorption de radon en un temps beaucoup plus court que le temps de désintégration de radon moyen.

**3.** Moniteur de radon passif selon la revendication 1 dans lequel ladite couche, quand elle a une épaisseur inférieure à la plage des particules alpha les plus énergiques, est complétée par une couche de matériau supplémentaire.

**4.** Moniteur de radon passif, tel que décrit dans la revendication 1, dans lequel ladite couche d'absorption se compose d'un film de plastique amorphe vitreux.

**5.** Moniteur de radon passif, tel que décrit dans la revendication 1, dans lequel ladite couche d'absorption se compose de membranes matricielles mélangées, comprenant des polymères organiques avec des tamis moléculaires dispersés.

**6.** Procédé pour les mesures à long terme de la concentration de radon avec une chambre de radon passive (10) avec deux sensibilités de réponse, telle que décrite dans la revendication 1, comprenant :

- l'exposition de la chambre de radon passive (10) à l'atmosphère de radon inconnue ;
- la formation de traces sur la surface d'un détecteur (12) à partir de particules alpha émises par le radon et ses produits de désintégration dans la chambre de radon de diffusion ;
- la formation de traces sur la surface du détecteur (12) à partir des particules alpha émises par le radon et ses produits de désintégration depuis la couche absorbante faisant face à ladite surface ;
- le développement dudit détecteur de traces par une gravure appropriée afin d'agrandir les tailles de traces pour faciliter leur comptage ;
- le calcul de la concentration moyenne de radon par un étalonnage approprié à partir de la concentration de traces depuis la surface de détecteur faisant face au volume intérieur de la chambre de diffusion ;
- le calcul de la concentration moyenne de radon par un étalonnage approprié à partir de la concentration de traces depuis la surface de détecteur exposée contre l'élément rayonnant absorbant ;
- l'évaluation de la valeur de concentration moyenne entre les deux dites valeurs de concentration de radon.

7. Moniteur passif compact (30) pour les mesures de radon à long terme avec deux sensibilités de réponse, obtenues en utilisant deux couches d'absorption de radon comprenant :

- une feuille (33) de plastique pour l'enregistrement de traces de particules alpha ;
- deux couches (32, 34) de matériaux d'absorption de radon faisant face audit détecteur de traces (33), lesdites couches ayant deux coefficients de séparation de radon différents à l'équilibre pour fournir deux réponses de détecteur différentes avec des sensibilités souhaitées ;
- un sac hermétiquement fermé (31) ayant une grande perméabilité au radon et une faible perméabilité à la vapeur d'eau afin de protéger de l'humidité et/ou de l'eau lesdites couches absorbantes avec le détecteur de traces entre elles.

8. Moniteur de radon passif tel que décrit dans la revendication 7, dans lequel chacun desdits matériaux absorbants a une épaisseur supérieure à la plage des particules alpha à détecter.

9. Moniteur de radon passif tel que décrit dans la revendication 7, dans lequel chacun desdits matériaux absorbants a une épaisseur suffisamment petite pour atteindre un type équilibre d'absorption de radon en un temps beaucoup plus court que le temps de désintégration de radon moyen.

10. Moniteur de radon passif selon la revendication 7, dans lequel ledit sac hermétiquement fermé est fourni par deux rubans adhésifs en juxtaposition.

11. Moniteur de radon passif tel que décrit dans la revendication 7, dans lequel ledit sac est un sac thermoscellé composé de plastique ayant une grande perméabilité au radon et une faible perméabilité à la vapeur d'eau.

12. Moniteur de radon passif tel que décrit dans la revendication 7, dans lequel ledit sac hermétiquement fermé présente des caractéristiques pour garantir que le temps de perméation moyen de radon dans ledit sac, quand il est ajouté au temps d'absorption de radon moyen d'une ou de l'autre couche absorbante, résulte en un temps beaucoup plus court que le temps de désintégration de radon moyen.

13. Procédé pour les mesures à long terme de concentrations de radon dans des environnements confinés, dans le sol, et dans l'eau par un moniteur passif (30) avec deux sensibilités de réponse, tel que décrit dans la revendication 7, comprenant :

- l'exposition dudit moniteur de radon passif (30) à l'atmosphère de radon inconnue ;
- la formation de traces sur la surface d'un détecteur (33) à partir de particules alpha émises par le radon et ses produits de désintégration capturés sur une des couches absorbantes (32, 34) adjacente à ladite surface de détecteur ;
- la formation de traces sur la surface restante dudit détecteur (33) à partir des particules alpha émises par le radon et ses produits de désintégration capturés sur l'autre élément rayonnant absorbant, adjacent à ladite surface de détecteur ;
- le développement dudit détecteur de traces par gravure pour faciliter le comptage de traces ;
- le calcul de la concentration de radon sur la base d'un étalonnage approprié à partir de la concentration de traces sur la surface de détecteur faisant face à l'un des éléments rayonnants d'absorption ;
- le calcul de la concentration de radon sur la base d'un étalonnage approprié à partir de la concentration de traces depuis la surface restante dudit détecteur de traces faisant face à l'autre couche d'absorption ;
- l'évaluation de la valeur de concentration moyenne entre les deux dites valeurs de concentration de radon.

**12**

**10** →

**11**

## FIG. 1

**22**

**21**

**20** →

**11**

**12**

**23**

**24**

## FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 929339
- IT 48568 A
- IT 51929
- IT 4856885 A
- SI 9111472
- US 3769144 A
- US 5065030 A

### Non-patent literature cited in the description

- Encyclopedia of Analytical Science. Radon''. In Radiochemical Methods. Academic Press Limited, 1995, 4359-4368
- **FLEISCHER.** Radon in the Environment-Opportunities and Hazards. *Nuclear Tracks and Radiation Measurements,* 1988, vol. 14 (4), 421-435
- **CSIGE ; CSEGZI.** The Radamon radon detector and an example of application. *Radiation Measurements,* 2001, vol. 34, 437-440
- **MORE ; HUBBARD.** *Rn absorption in plastic holders for alpha track detectors: a source of error- Radiation Protection Dosimetry,* 1997, vol. 71, 85-91
- **TANNER.** Errors in measuring radon in soil gas by means of passive detector. *Nuclear Geophysics,* 1991, vol. 5, 25-30
- **MAZUR et al.** Measurements of radon concentration in soil gas by CR-39 detectors. *Radiation Measurements,* 1999, vol. 31, 295-300
- **D. PRESSIANOV et al.** The compact disk as radon detector-A laboratory study of the method. *Health Physics,* 2003, vol. 64, 642-651
- **MCKEON et al.** Polymers of intrinsic microporosity (PIMs): Bridging the void between microporous and polymeric materials. *Chemistry - European Journal,* 2005, vol. 11, 2610-2620
- **CHUNG et al.** Mixed matrix membranes (MMMs) comprising organic polymers with dispersed inorganic fillers for gas separation. *Progress in Polymer Science,* 2007, vol. 32, 483-507
- **WOJCIK.** Measurement of radon diffusion and solubility constants in membrane. *Nuclear Instruments and Methods in Physics Research,* 1991, vol. B61, 8-11
- Krypton, Xenon-, Radon-gas solubilities. **CLEVER.** Solubility Data Series. Pergamon Press, 1985, vol. 2, 217-237
- **T. D. BURCHELL ; R.R. JUDKINS.** A novel carbon fiber based material and separation technology. *Energy Conservation and Management,* 1997, vol. 38, S99-S104
- Kripton, xenon and radon-gas solubilities. **H.L. CLEVER.** Solubility data series. Pergamon Press, 1978, vol. 2
- **CSIGE ; S. CSEGZI.** The Radamon radon detector and an example of application. *Radiation Measurements,* 2001, vol. 34, 437-440
- **T. S. CHUNG ; L.Y. JIANG ; Y. LI ; S. KULPRATHIPANJA.** Mixed matrix membranes (MMMs) comprising organic polymers with dispersed inorganic fillers for gas separation. *Progress in Polymer Science,* 2007, vol. 32, 483-507
- **R. L. FLEISCHER.** Radon in the Environment-Opportunities and Hazards. *Nuclear Tracks and Radiation Measurements,* 1988, vol. 14 (4), 421-435
- **D. MAZUR ; M. JANIK ; J. LOSKIEWICZ ; P. OLKO ; J. SWAKON.** Measurements of radon concentration in soil gas by CR-39 detectors. *Radiation Measurements,* 1999, vol. 31, 295-300
- **N. B. MCKEOWN et al.** Polymers of intrinsic microporosity (PIMs): Bridging the void between microporous and polymeric materials. *Chemistry - European Journal,* 2005, vol. 11, 2610-2620
- **H. MORE ; L.H. HUBBARD.** *Rn absorption in plastic holders for alpha track detectors: a source of error-Radiation Protection Dosimetry,* 1997, vol. 71, 85-91
- **F. MULLER.** Doctorate thesis in German from the university of Heiderberg. *Die Diffusions, Loeslichkeits- und Permabilitaetskoeffizienten von Radon-22 in Handelsueblichen Kunststoffen*
- **D. PRESSIANOV ; J. BUYSSE ; A. POFFIJIN ; G. MEESEN ; A. VAN DEYNSE.** The compact disk as radon detector-A laboratory study of the method. *Health Physics,* 2003, vol. 64, 642-651
- **SCARPITTA.** A new beaded carbon molecular sieve sorbent for Rn monitoring. *Health Physics.,* 1996, vol. 70, 673-679
- **SUN et al.** Field comparison of measurements of commercially available short-term radon detectors. *Health Physics,* 2006, vol. 91, 221-226

- **A. B. TANNER.** Error in measuring radon in soil gas by means of passive detector. *Nuclear Geophysics,* 1991, vol. 5, 25-30
- **L. TOMMASINO.** Radon monitoring by alpha track detection. *Nucl. Tracks Radiat. Meas.,* 1990, vol. 17, 43-48
- **L. TOMMASINO.** Passive sampling and monitoring of radon and other radioactive and/or toxic gases. *Radiation Protection Dosimetry,* 1998, vol. 78, 55-58
- **L. TOMMASINO.** Personal dosimetry and area monitoring for neutrons and radon in workplaces. *Radiation Measurements,* 2001, vol. 34, 449-456
- Radiochemical Methods: Radon. **L.TOMMASINO.** Encyclopedia of Analytical Science. 2005, 32-44
- **A. VAN DEYNSE ; C. COSMA ; A. POFFIJN.** *A passive radon dosimeter based on the combination of a track etch detector and activated charcoal Radiation Measurements,* 1999, vol. 31, 325-330
- **M. WOJCIK.** Measurement of radon diffusion and solubility constants in membrane. *Nuclear Instruments and Methods in Physics Research,* 1991, vol. B61, 8-11